# EUROPEAN PATENT SPECIFICATION

(11) **EP 4 127 944 B1**
(45) Date of publication and mention of the grant of the patent: **26.03.2025**
(21) Application number: 20726410.2
(22) Date of filing: 15.05.2020
(51) Int. Cl.: G06F 12/10, G06F 12/1009, G06F 12/14

(54) **MEMORY MANAGEMENT APPARATUS AND METHOD**
SPEICHERVERWALTUNGSVORRICHTUNG UND -VERFAHREN
APPAREIL ET PROCÉDÉ DE GESTION DE MÉMOIRE

(43) Date of publication of application: 08.02.2023
(73) Proprietor: Huawei Technologies Co., Ltd., Shenzhen, Guangdong 518129 (CN)
(72) Inventor: EKBERG, Jan-Erik, 16440 Kista (SE); STOPPA, Igor, 16440 Kista (SE)
(74) Representative: Epping - Hermann - Fischer
(86) International application number: PCT/EP2020/063672
(87) International publication number: WO 2021/228408

(56) References cited:
- GB-A- 2 570 474
- US-A1- 2018 032 447

## Description

### TECHNICAL FIELD

The present disclosure relates generally to the field of computer engineering, and more particularly, to a memory management apparatus and method that provide virtual-to-physical address translation in a protected manner.

### BACKGROUND

Some operating systems (OS), like Linux, support the concept of a virtual memory to utilize a physical memory for computing processes such that each of the computing processes "considers" itself as the only running process. The virtual memory is especially useful because it may circumvent some issues peculiar to the physical memory, such as, for example, gaps, i.e. unused portions, in the physical memory, as well as make several scattered physical pages of the physical memory appear as continuous. Further, the virtual memory allows a user to operate on a virtual address space which may be much larger than a physical address space. Address translation necessary to map these spaces to each other is performed by a memory management unit (MMU).

The MMU performs the address translation mainly using an address translation table, which is also referred to as a page table. The address translation table is pre-filled with mappings between virtual addresses of the virtual address space and physical addresses of the physical address space. Besides the address translation, the MMU is configured to enforce certain attributes on physical memory pages accessed through the physical addresses which the corresponding virtual addresses are mapped to. Such attributes are, for example, to be "read-only" or "executable but not modifiable". To speed up the address translation, the MMU may have an internal cache called a Translation Look-aside Buffer (TLB), which stores the most recently used mappings between the virtual and physical addresses.

it is not infrequent that a certain physical memory page is mapped with certain restrictions, such as, for example, "read-only". In these cases, a malicious user might try to circumvent such restrictions either by making the physical memory page writable via a corresponding update to the address translation table, or by turning off the MMU entirely, thereby gaining direct access to the physical memory page. To avoid these malicious attacks, hypervisor-based protection or alternative mappings may be used for the address translation table. However, both the hypervisor-based protection and the alternative mappings cause additional significant latencies, which eventually slow the execution of the computing processes requiring the address translation.

US 2018/032447 A1 discloses that a table walker receives, from a requesting entity, a request to translate a first address into a second address associated with a page of memory. During a corresponding table walk, when a lock indicator in an entry in a reverse map table (RMT) for the page is set to mark the entry in the RMT as locked, the table walker halts processing the request and performs a remedial action. In addition, when the request is associated with a write access of the page and an immutable indicator in the entry in the RMT is set to mark the page as immutable, the table walker halts processing the request and performs the remedial action. Otherwise, when the entry in the RMT is not locked and the page is not marked as immutable for a write access, the table walker continues processing the request.

### SUMMARY

This summary is provided to introduce a selection of concepts in a simplified form that are further described below in the detailed description. This summary is not intended to identify key features of the present disclosure, nor is it intended to be used to limit the scope of the present disclosure. The invention is defined by the appended claims. In the following, parts of the description and drawings referring to embodiments which are not covered by the claims are not presented as embodiments of the invention, but as examples useful for understanding the invention.

It is an objective of the present disclosure to provide a technical solution that ensures virtual-to-physical address translation in a protected manner.

The objective above is achieved by the features of the independent claims in the appended claims. Further embodiments and examples are apparent from the dependent claims, the detailed description and the accompanying drawings.

According to a first aspect, a memory management apparatus is provided, which comprises at least one processing unit and a storage unit coupled to the at least one processing unit. The storage unit is configured to store both processor-executable instructions and data, which, when processed, cause the at least one processing unit to:
- track a virtual address of a virtual address space and a physical address of a physical address space that are provided with a mapping in an address translation table;
- generate metadata indicative of a presence of the mapping in the address translation table for the virtual address and the physical address;
- intercept an updating operation for the address translation table, the updating operation relating to creating a new mapping between a target virtual address of the virtual address space and a target physical address of the physical address space in the address translation table;
- based on the metadata, determine whether at least one of the target virtual address and the target physical address is provided with the mapping in the address translation table; and
- based on a determining result, decide whether to perform the updating operation.

With the memory management apparatus thus configured, it is possible to detect and prevent malicious attacks, such as those aimed at the double mapping, on the address translation table. Furthermore, the memory management apparatus according to the first aspect of the present disclosure may provide a similar or even improved level of security for the address translation table compared to the hypervisor-based protection, while not causing the latency peculiar to the hypervisor-based protection.

In one embodiment of the first aspect, the at least one processing unit is configured to store the metadata to a predefined portion of the storage unit. This may simplify the use of the metadata in the operation of the apparatus according to the first aspect of the present disclosure.

According to the first aspect, the at least one processing unit is configured, in response to determining that each of the target virtual address and the target physical address is without the mapping in the address translation table, to perform the updating operation. After that, the at least one processing unit is further configured to update the metadata. By so doing, it is possible to detect that the updating operation is not related to the malicious attacks, such, for example, as the double mapping.

According to the first aspect, the at least one processing unit is configured, in response to determining that at least one of the target virtual address and the target physical address is provided with the mapping in the address translation table, to reject the updating operation. By so doing, it is possible to detect that the updating operation is related to the malicious attacks, such, for example, as the double mapping.

In one embodiment of the first aspect, the at least one processing unit is further configured to provide a notification of the rejecting the updating operation. With such a notification, an authorized user may be informed of attempts of the malicious attacks, and, in response, may take proper protection measures, if required.

In one embodiment of the first aspect, the at least one processing unit is configured, before the determining, to check whether the target virtual address and the target physical address are within predefined protected subspaces of the virtual address space and the physical address space, respectively. In this embodiment, the at least one processing unit is configured to proceed with the determining and deciding when the target virtual address and the target physical address are within the predefined protected subspaces. This may enable selective protection for the address translation table and, consequently, the physical addresses of the physical address space.

In one embodiment of the first aspect, the at least one processing unit is configured to generate the metadata as a bitmap. Such a bitmap is indicative of the virtual address and the physical address provided with the mapping in the address translation table by using a first preset bit value. This may simplify and accelerate the operation of the apparatus according to the first aspect of the present disclosure.

In one embodiment of the first aspect, the at least one processing unit is further configured to indicate, in the bitmap, a virtual address of the virtual address space and a physical address of the physical address space that are without the mapping in the address translation table by using a second preset bit value. The second preset bit value is different from the first preset bit value. By so doing, it is possible to ensure better distinguishing between the virtual and physical addresses with and without the mappings in the address translation table.

According to a second aspect, a memory management method is provided. The method starts with the step of tracking a virtual address of a virtual address space and a physical address of a physical address space that are provided with a mapping in an address translation table. Then, the method proceeds to the step of generating metadata indicative of a presence of the mapping in the address translation table for the virtual address and the physical address. The method further proceeds to the step of intercepting an updating operation for the address translation table. The updating operation relates to creating a new mapping between a target virtual address of the virtual address space and a target physical address of the physical address space in the address translation table. Next, the method proceeds to the step of determining, based on the metadata, whether at least one of the target virtual address and the target physical address is provided with the mapping in the address translation table. The method ends up with the step of deciding, based on a determining result, whether to perform the updating operation. By so doing, it is possible to detect and prevent malicious attacks, such as those aimed at the double mapping, on the address translation table. Furthermore, it is possible to provide a similar or even improved level of security for the address translation table compared to the hypervisor-based protection, while not causing the latency peculiar to the hypervisor-based protection.

According to the second aspect, if it is determined that each of the target virtual address and the target physical address is without the mapping in the address translation table, the step of deciding comprises deciding to perform the updating operation and updating the metadata. By so doing, it is possible to detect that the updating operation is not related to the malicious attacks, such, for example, as the double mapping.

According to the second aspect, if it is determined that at least one of the target virtual address and the target physical address is already provided with the mapping in the address translation table, the step of deciding comprises deciding to reject the updating operation. By so doing, it is possible to detect that the updating operation is related to the malicious attacks, such, for example, as the double mapping.

In one embodiment of the second aspect, the method further comprises the step of providing a notification of the rejecting the updating operation. With such a notification, an authorized user may be informed of attempts of the malicious attacks, and, in response, may take proper protection measures, if required.

In one embodiment of the second aspect, the method further comprising, before the step of determining, the step of checking whether the target virtual address and the target physical address are within predefined protected subspaces of the virtual address space and the physical address space, respectively. In this embodiment, the steps of determining and deciding are performed when the target virtual address and the target physical address are checked to fall within the predefined protected subspaces. This may enable selective protection for the address translation table and, consequently, the physical addresses of the physical address space.

In one embodiment of the second aspect, the step of generating comprises generating the metadata as a bitmap. Such a bitmap is indicative of the virtual address and the physical address provided with the mapping in the address translation table by using a first preset bit value. This may simplify and accelerate the execution of the method according to the second aspect of the present disclosure.

In one embodiment of the second aspect, the method further comprising the step of indicating, in the bitmap, a virtual address of the virtual address space and a physical address of the physical address space that are without the mapping in the address translation table by using a second preset bit value. The second present bit value is different from the first preset bit value. By so doing, it is possible to ensure better distinguishing between the virtual and physical addresses with and without the mappings in the address translation table.

According to a third aspect, a computer-readable storage medium is provided. The computer-readable storage medium stores a computer program which, when executed by at least one processor, causes the at least one processor to perform the method according to the second aspect of the present disclosure. This may simplify the implementation of the method according to the second aspect of the present disclosure in any computing device, such, for example, as the apparatus according to the first aspect of the present disclosure.

Other features and advantages of the present disclosure will be apparent upon reading the following detailed description and reviewing the accompanying drawings.

### BRIEF DESCRIPTION OF THE DRAWINGS

The essence of the present disclosure is explained below with reference to the accompanying drawings in which:
FIG. 1 shows a typical computer architecture for virtual-to-physical address translation in simplified form;
FIG. 2 shows a block diagram that explains how to implement the virtual-to-physical address translation by using a k-level address translation table;
FIG. 3 shows a block diagram that explains how a malicious user might implement double mapping for the same physical address;
FIG. 4 shows a block diagram of a memory management apparatus in accordance with one exemplary embodiment;
FIG. 5 shows a flowchart of a method for operating the memory management apparatus shown in FIG. 4 in accordance with one exemplary embodiment;
FIG. 6 shows a computer architecture for the virtual-to-physical address translation in accordance with one exemplary embodiment.

### DETAILED DESCRIPTION

Various embodiments of the present disclosure are further described in more detail with reference to the accompanying drawings. However, the present disclosure may be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatus and method disclosed herein may be implemented in practice by using any numbers of the embodiments provided herein. Furthermore, it should be understood that any embodiment of the present disclosure may be implemented using one or more of the elements presented in the appended claims.

The word "exemplary" is used herein in the meaning of "used as an illustration". Unless otherwise stated, any embodiment described herein as "exemplary" should not be construed as preferable or having an advantage over other embodiments.

According to the embodiments disclosed herein, a virtual address space may refer to a set/range of logical or virtual addresses created by an operating system (OS) for a particular process. The virtual address space may be organized into virtual pages, with each page being a subspace of the virtual address space. In other words, each virtual page may contain one or more virtual addresses of the virtual address space. The virtual page should be eventually mapped to a physical page, also known as a page frame, which is a subspace of the physical address space. Said mapping is also referred to as address translation or paging and is typically performed by a memory management unit (MMU).

As used in the embodiments disclosed herein, an address translation table may refer to a data structure used in the OS to store the above-mentioned mappings between the virtual addresses and the physical addresses. More specifically, the address translation table may be referred to as a page table represented by an array of page table entries (PTEs) that maps the virtual pages to the physical pages. The MMU or the like may use the address translation table when it receives a request for said mapping from a processing unit, such, for example, as a central processing unit (CPU). The address translation table may be filled in with the mappings on first-come-first-served basis.

The address translation table may be organized as a flat table that contains all the mappings from the virtual address space to the physical address space for each process, including those mappings that correspond to currently non-mapped virtual and physical pages. However, such an organization wastes a lot of memory for the address translation table itself. To overcome this drawback, the address translation table may be organized in a hierarchical manner. The hierarchical organization implies splitting the address translation table into various levels, so that the PTEs in higher levels (closer to the root of the address translation table), which are also known as Page Middle Directory (PMD) entries, hold information for larger regions of the physical memory. Thus, the size of the hierarchically organized address translation table depends on the number of the virtual pages that each process uses.

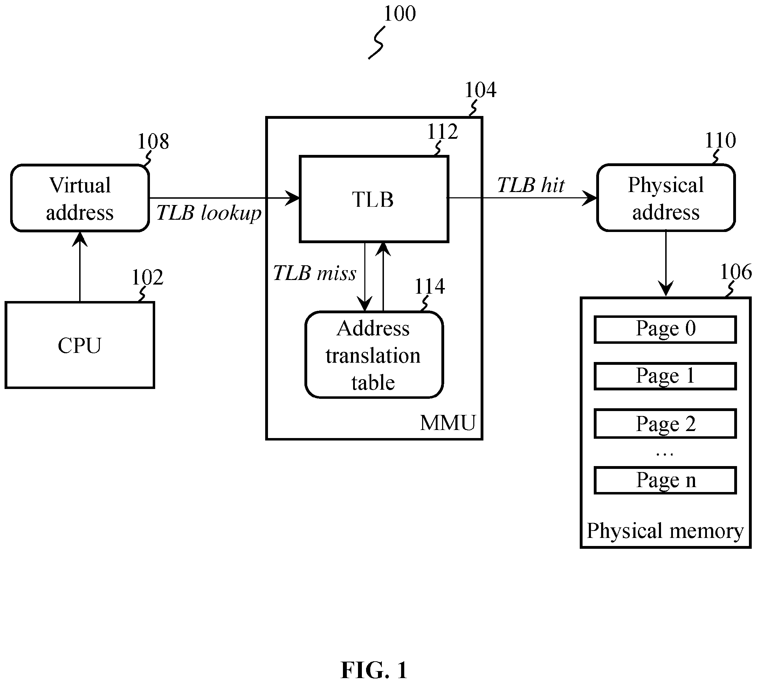

FIG. 1 shows a typical computer architecture 100 for virtual-to-physical address translation. The computer architecture 100 comprises the following hardware components: a CPU 102, an MMU 104, and a paged physical memory 106 organized into physical pages 0, 1, ..., n. The CPU 102 is configured to generate a virtual address 108, and the MMU 104 is configured to map the virtual address 108 to a physical address 110 that allows gaining access to certain one or more of the physical pages 0, 1, ..., n of the physical memory 106. To speed up this mapping, the MMU 104 may use an internal cache called a Translation Lookaside Buffer (TLB) 112. The TLB 112 is configured to store the most recently used mappings between the virtual and physical addresses. When the MMU 104 receives the virtual address 108, it first looks up the TLB 112 to determine whether the TLB 112 already stores the mapping for the virtual address 108. If a match is found (which is known as a TLB hit), the physical address 110 is returned and the access to the physical memory 106 may continue. However, if there is no match (which is known as a TLB miss), the MMU 104 proceeds with looking up an address translation table 114 to find out whether it contains the mapping for the virtual address 108 (which is known as a page walk). If such a mapping exists, it is written back to the TLB 112, and the address translation operation is restarted (in this case, the MMU 104 will find the mapping for the virtual address 108 in the TLB 112, and the access to the physical memory 106 will continue). However, if there is no mapping for the virtual address 108 in the address translation table 114 (which is known as a page fault), the MMU 104 interrupts the address translation operation and passes control to the OS, so that the OS could execute a page fault handler to check the reason for the page fault and take a corresponding action to remedy the situation occurred.

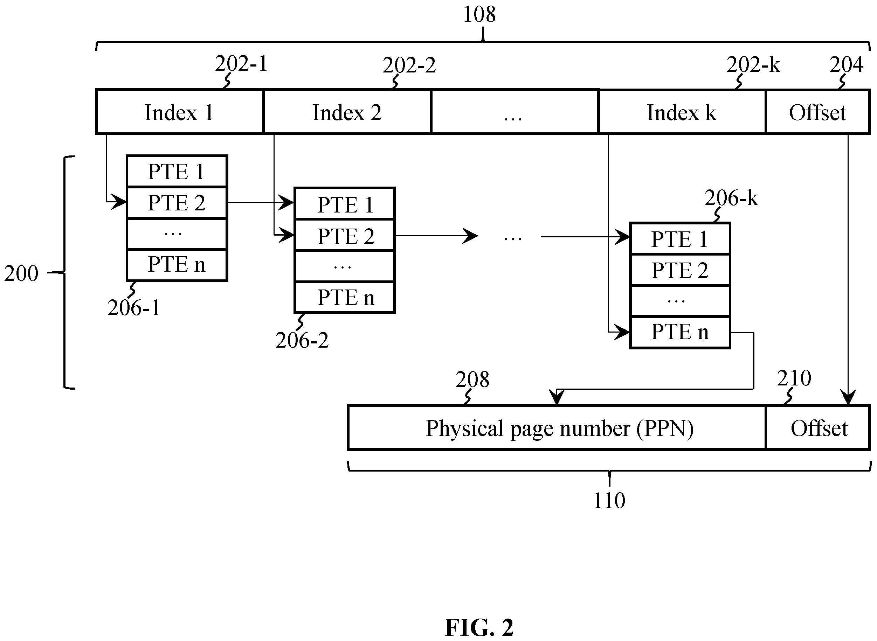

FIG. 2 shows a block diagram that explains how to implement the virtual-to-physical address translation by using a k-level address translation table 200. In particular, it is assumed that the virtual address 108 is partitioned into indices 202-1, 202-2, ..., 202-k and an offset 204. The k-level address translation table 200 is constituted by hierarchically arranged tables 206-1, 206-2, ..., 206-k. The table 206-1 corresponds to level 1 of the k-level address translation table 200, the table 206-2 corresponds to level 2 of the k-level address translation table 200, and so on. Each of the tables 206-1, 206-2, ..., 206-k is constituted by an array of PTEs 1, 2, ..., n. Each of the indices 202-1, 202-2, ..., 202-k indicates a particular PTE in one of the tables 206-1, 206-2, ..., 206-k at the corresponding level of the k-level address translation table 200. In turn, each PTE in a level-j table, 1 ≤ j ≤ k-1, points to the base of some table at level j+1. In other words, PTE 2 (indicated by the index 202-1) in the level-1 table 206-1 points to the base, i.e. PTE 1, of the level-2 table 206-2, which further changes to PTE 2 based on the index 202-2, and so on. Each PTE in the level-k table 206-k contains a physical page number (PPN) 208 of some physical page of the physical memory 106. The PPN 208 and an offset 210 (determined based on the offset 204) constitute the physical address 110. Thus, to construct the physical address 110, the MMU 104 should access k PTEs before it can determine the PPN 208.

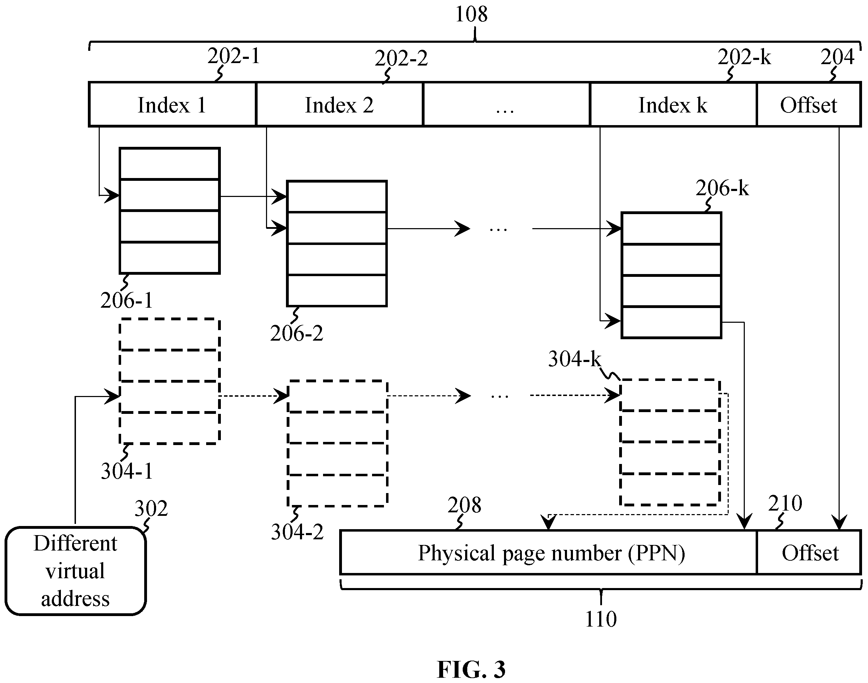

FIG. 3 shows a block diagram that explains how a malicious user might implement the double mapping for the same physical address 110. It is assumed that the mapping of the virtual address 108 to the physical address 110 is initially provided by the k-level address translation table 200, as explained above with reference to FIG. 2. Then, the malicious user decides to map a different virtual address 302 to the same physical address 110. The virtual address 302 may have the same or similar configuration as the virtual address 108, and its details are omitted in order not to overload FIG. 3. To map the virtual address 302 to the physical address 110, the malicious user should update the k-level address translation table 200 such that it provides said mapping via hierarchically arranged tables 304-1, 304-2, ..., 304-k. The number of the tables 304-1, 304-2, ..., 304-k may also be less or more than that of the tables 206-1, 206-2, ..., 206-k, depending on the configuration of the virtual address 302 which the malicious user wants to map to the physical address 110. Besides the double mapping shown in FIG. 3, there may be some other malicious attacks which, for example, include the following: making the physical page corresponding to the physical address 110 writable, and turning off the MMU 104 entirely, thereby gaining direct access to the physical pages of the physical memory 106.

One possible way to avoid the above-mentioned malicious actions is to use hypervisor-based protection for the k-level address translation table 200. A hypervisor may refer to computer software, firmware or hardware that creates and runs virtual machines. In this case, all the mappings of the k-level address translation table 200 are also registered to the hypervisor, so that the hypervisor can replicate the same protections as provided by the OS, i.e. an OS kernel in Exception Level 1 (EL1)), but in its own exception level (EL2), on the physical pages of the physical memory 106. This additional protection prevents any attempt to relax the protection for a certain physical page, mapping it to a different virtual address (like the virtual address 302), i.e. the double mapping. However, the problem of the hypervisor-based protection is that context switches from the OS kernel to and from the hypervisor, which are used to detect if the mapping has been abused, cause an additional significant latency.

Another possible way to avoid the above-mentioned malicious attacks may consist in introducing alternative mappings for the k-level address translation table 200, which allow the physical pages to be mapped as writable. Such alternative mappings are normally inactive, preventing malicious writes from happening easily (i.e. the malicious user would now have to activate the corresponding alternate mapping(s) too). However, the protection based on the alternative mappings also suffers from a noticeable latency caused by switching between the original and alternative mappings. Furthermore, the protection based on the alternative mappings is less reliable than the hypervisor-based protection.

The exemplary embodiments disclosed herein provide a technical solution that allows mitigating or even eliminating the above-mentioned drawbacks peculiar to the prior art. In particular, the technical solution disclosed herein is based on tracking the virtual and physical addresses provided with the mappings in the address translation table and generating metadata distinguishing between the virtual and physical addresses with and without the mappings in the address translation table. In other words, the metadata may be used to check if a corresponding PTE was already created for a certain virtual or physical address in the address translation table. Subsequently, when a request for creating a new mapping in the address translation table is intercepted, the virtual and physical addresses corresponding to the new mapping are checked by using the metadata, and a decision to create the new mapping is made if none of the virtual and physical addresses corresponding to the new mapping is provided with any mapping in the address translation table. By so doing, it is possible to detect and prevent the malicious attacks, such as those aimed at the double mapping, on the address translation table. Furthermore, it is possible to provide a similar or even improved level of security for the address translation table compared to the hypervisor-based protection, while not causing the latency peculiar to the hypervisor-based protection.

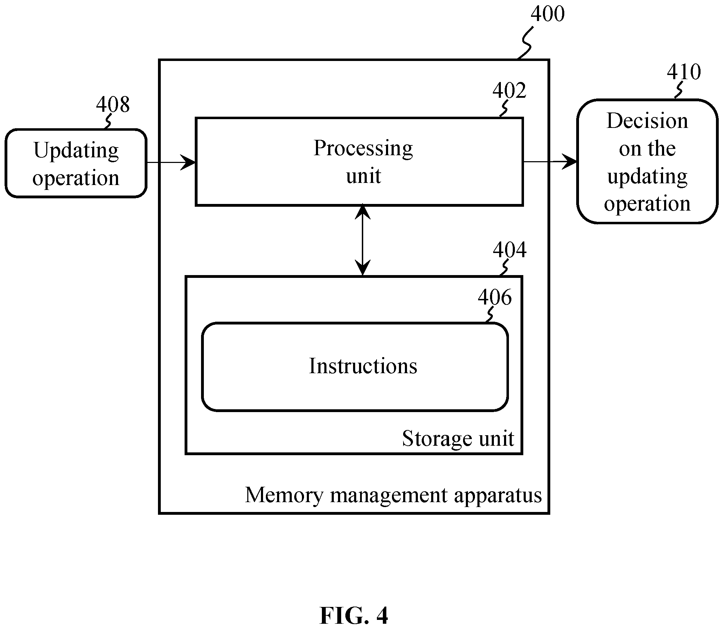

FIG. 4 shows a block diagram of a memory management apparatus 400 in accordance with one exemplary embodiment. The memory management apparatus 400 comprises a processing unit 402 and a storage unit 404. The storage unit 404 stores processor-executable instructions 406 which, when executed by the processing unit 402, cause the processing unit 402 to intercept an updating operation 408 and make a decision 410 on the updating operation 408, as will be described later. It should be noted that the number, arrangement and interconnection of the constructive elements constituting the memory management apparatus 400, which are shown in FIG. 4, are not intended to be any limitation of the present disclosure, but merely used to provide a general idea of how the constructive elements may be implemented within the memory management apparatus 400. For example, the processing unit 402 may be replaced with several processing units, as well as the storage unit 404 may be replaced with several storage units, depending on a particular application.

The processing unit 402 may be implemented as one or more processor cores, a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processing unit 402 may be implemented as any combination of one or more of the aforesaid. As an example, the processing unit 402 may be a combination of two or more microprocessors.

The storage unit 404 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 406 stored in the storage unit 404 may be configured as a computer-executable code which causes the processing unit 402 to perform the aspects of the present disclosure. The computer-executable code for carrying out operations or steps for the aspects of the present disclosure may be written in any combination of one or more programming languages, such as Java, C++, or the like. In some examples, the computer-executable code may be in the form of a high-level language or in a pre-compiled form, and be generated by an interpreter (also pre-stored in the storage unit 404) on the fly.

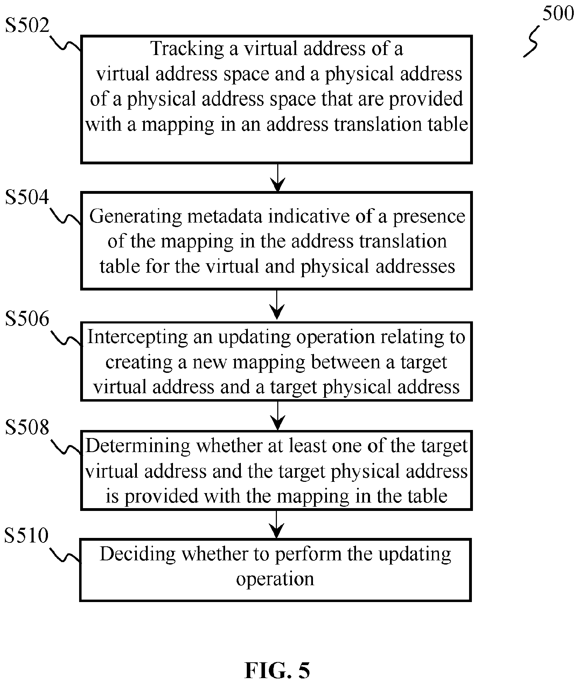

FIG. 5 shows a flowchart of a method 500 for operating the memory management apparatus 400 in accordance with one exemplary embodiment. Each of the steps of the method 500 is performed by the processing unit 402. The method 500 starts with a step S502, in which the processing unit 402 tracks which of virtual addresses of a given virtual address space and which of physical addresses of a given physical address space are provided with mappings in a pre-filled address translation table (like the k-level address translation table 200). Then, the method 500 proceeds to a step S504, in which the processing unit 402 generates metadata indicative of a presence of the mappings in the address translation table for the virtual and physical addresses. After that, a next step S506 is initiated, in which the processing unit 402 intercepts the updating operation 408 for the address translation table. The updating operation 408 relates to creating a new mapping between a target virtual address of the virtual address space and a target physical address of the physical address space in the address translation table. Further, the method 500 proceeds to a step S508, in which the processing unit 402 determines whether at least one of the target virtual address and the target physical address is provided with any mapping in the address translation table. The method 500 ends up with a step S510, in which the processing unit 402 issues the decision 410 on the updating operation 408 based on the results of the step S508.

If it is determined in the step S508 that each of the target virtual address and the target physical address is without any mapping in the address translation table, the processing unit 402 decides to perform the updating operation 408 in the step S510. The processing unit 402 is further configured to update the metadata such that the metadata now indicate the target virtual and physical addresses too.

However, if it is determined in the step S508 that at least one of the target virtual address and the target physical address is already provided with any mapping in the address translation table, the processing unit 402 decides to reject the updating operation 408. In other words, the presence of the mapping for any one of the target virtual address and the target physical address in the address translation table implies that the updating operation 408 is malicious and aimed, for example, at the double mapping. In addition, the processing unit 402 may be further configured to provide a notification of said rejecting the updating operation 408. With such a notification, an authorized user may be informed of attempts of the malicious attacks, and, in response, may take proper protection measures, if required.

In one exemplary embodiment, the processing unit 402 is further configured to store the metadata to a predefined portion of the storage unit 404. Thus, similar to the most recently used mappings cached in the TLB, the metadata associated with the mappings in the address translation table may also be cached in the storage unit 404.

As for the metadata themselves, the processing unit 402 may be configured to generate them as a bitmap that indicates the virtual and physical addresses provided with the mappings in the address translation table by using a first preset bit value, for example, "1". The processing unit 402 may be further configured to indicate, in the same bitmap, the virtual and physical addresses without the mappings in the address translation table by using a second preset bit value, for example, "0". It should be apparent to those skilled in the art that the structure of the metadata is not limited to the one described above and may be replaced with any other data structure, depending on a particular application. For example, the metadata may comprise two separate bitmaps, with one bitmap properly marking the virtual addresses (a virtual address bitmap for short) and another bitmap properly marking the physical addresses (a physical address bitmap for short).

Let us now give one example in which the metadata comprises the virtual address bitmap and the physical address bitmap and the addresses in each bitmap are marked using "1" and "0", as mentioned above. Then, the steps S508 and S510 of the method 500 may be performed as follows.

At first, the virtual address bitmap is tested for the target virtual address indicated in the updating operation 408. If the target virtual address is marked with "0" in the virtual address bitmap, the processing unit 402 determines, in the step S508, that there is no PTE (or mapping, in other words) associated with the target virtual address in the address translation table, and the step S508 continues in relation to the target physical address indicated in the updating operation 408. If the target virtual address is marked with "1" in the virtual address bitmap, the processing unit 402 determines, in the step S508, that there is an existing PTE associated with the target virtual address in the address translation table, whereupon the updating operation 408 is rejected by the processing unit 402 in the step S510.

The physical address bitmap may be tested for the target physical address when the target virtual address is found to be marked with "0". If the target physical address is marked with "0" in the physical address bitmap, the processing unit 402 determines, in the step S508, that there is no PTE associated with the target physical address in the address translation table, whereupon the updating operation 408 is allowed in the step S510, i.e. the processing unit 402 decides to perform it. If the target physical address is marked with "1" in the physical address bitmap, the processing unit 402 determines, in the step S508, that there is an existing PTE associated with the target physical address in the address translation table, whereupon the updating operation 408 is rejected by the processing unit 402 in the step S510.

In one exemplary embodiment, the processing unit 402 is further configured, before the step S508, to check whether the target virtual and physical addresses are within predefined protected subspaces of the virtual and physical address spaces, respectively. In this embodiment, the processing unit 402 is configured to proceed to the steps S508 and S510 of the method 500 when the target virtual and physical addresses are within such predefined protected subspaces. This may enable selective protection for the address translation table and, consequently, the physical addresses of the physical address space.

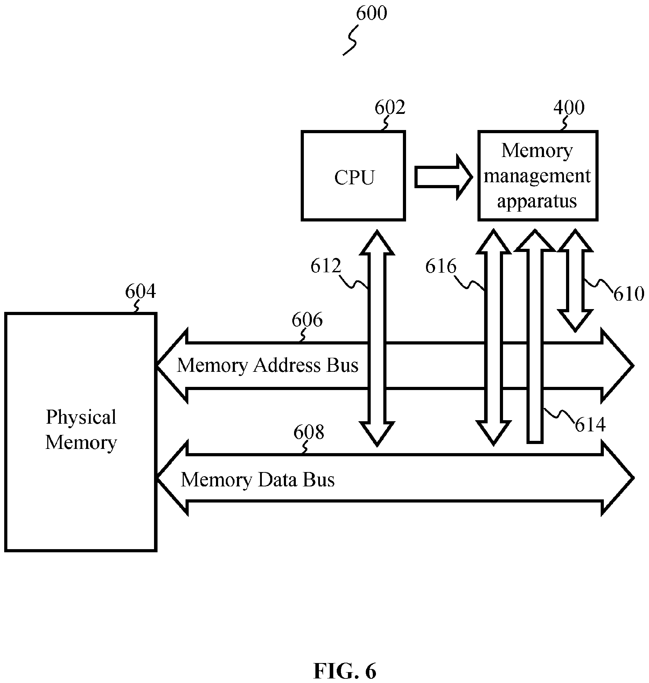

FIG. 6 shows a computer architecture 600 for the virtual-to-physical address translation in accordance with one exemplary embodiment. The computer architecture 600 comprises the following hardware components: a CPU 602, a physical memory 604, and the memory management apparatus 400. The physical memory 604 is provided with a memory address bus 606 for accessing physical addresses of the physical memory 604 and a memory data bus 608 for reading/writing data from/to the physical memory 604. The CPU 602 does not access the memory address bus 606 directly; instead, it relies on the memory management apparatus 400 to generate a physical address (like the physical address 110), whenever it needs to perform a memory operation. To generate the physical address, the memory management apparatus 400 accesses the memory address bus 606 (which is shown a double-headed arrow 610). The CPU 602 may directly access the memory data bus 608 (which is shown by a double-headed arrow 612) to read and write data from and to the physical memory 604 by using the physical address generated by the memory management apparatus 400. The conventional MMU, like the MMU 104, never writes anything to the physical memory 604: it can only read data therefrom via the memory data bus 608 (which is shown by an arrow 614). In turn, the memory management apparatus 400, which is used in the computer architecture 600 instead of the conventional MMU, may be assigned a portion of the physical memory 604 where the memory management apparatus 400 may autonomously write the metadata, such, for example, as the bitmaps discussed above (which is shown by a double-headed arrow 616). This may be done if, for example, the storage unit 404 of the memory management apparatus 400 is no longer able to store the metadata for some reason.

It should be noted that each step or operation of the method 500, or any combinations of the steps or operations, can be implemented by various means, such as hardware, firmware, and/or software. As an example, one or more of the steps or operations described above can be embodied by processor-executable instructions, data structures, program modules, and other suitable data representations. Furthermore, the executable instructions which embody the steps or operations described above can be stored on a corresponding data carrier and executed by the processing unit 402. This data carrier can be implemented as any computer-readable storage medium configured to be readable by said at least one processor to execute the processor-executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

It should also be noted that the memory management apparatus 400 may operate in concert with the existing hypervisor. For example, if the hypervisor already protects the address translation table, the protection provided by the memory management apparatus 400 may be treated as an alternate option.

In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

## Claims

1. A memory management apparatus (400) comprising:
at least one processing unit (402); and
a storage unit (404) coupled to the at least one processing unit (402) and configured to store processor-executable instructions (406),
wherein the processor-executable instructions (406), when executed by the at least one processing unit (402), cause the at least one processing unit (402) to:
- track a virtual address (108) of a virtual address space and a physical address (110) of a physical address space that are provided with a mapping in an address translation table (114);
- generate metadata indicative of a presence of the mapping in the address translation table (114) for the virtual address (108) and the physical address (110);
- intercept an updating operation (408) for the address translation table (114), the updating operation (408) relating to creating a new mapping between a target virtual address (108) of the virtual address space and a target physical address (110) of the physical address space in the address translation table (114);
- based on the metadata, determine whether at least one of the target virtual address (108) and the target physical address (110) is provided with the mapping in the address translation table (114); and
- based on a determining result, decide (410) whether to perform the updating operation, wherein the at least one processing unit is configured, in response to determining that each of the target virtual address (108) and the target physical address (110) is without the mapping in the address translation table (114), to perform the updating operation, and to update the metadata and, in response to determining that at least one of the target virtual address (108) and the target physical address (110) is provided with the mapping in the address translation table (114), to reject the updating operation.

2. The memory management apparatus (400) of claim 1, wherein the at least one processing unit (402) is configured to store the metadata to a predefined portion of the storage unit (404).

3. The memory management apparatus (400) of claim 1 or 2, wherein the at least one processing unit (402) is further configured to provide a notification of the rejecting the updating operation (408).

4. The memory management apparatus (400) of any one of claims 1 to 3, wherein the at least one processing unit (402) is configured, before the determining, to check whether the target virtual address (108) and the target physical address (110) are within predefined protected subspaces of the virtual address space and the physical address space, respectively, and to proceed with the determining and deciding when the target virtual address (108) and the target physical address (110) are within the predefined protected subspaces.

5. The memory management apparatus (400) of any one of claims 1 to 4, wherein the at least one processing unit (402) is configured to generate the metadata as a bitmap, the bitmap indicating the virtual address (108) and the physical address (110) provided with the mapping in the address translation table (114) by using a first preset bit value.

6. The memory management apparatus (400) of claim 5, wherein the at least one processing unit (402) is further configured to indicate, in the bitmap, a virtual address (108) of the virtual address space and a physical address (110) of the physical address space that are without the mapping in the address translation table (114) by using a second preset bit value, the second preset bit value being different from the first preset bit value.

7. A memory management method (500) comprising the following steps:
tracking (S502) a virtual address of a virtual address space and a physical address of a physical address space that are provided with a mapping in an address translation table;
generating (S504) metadata indicative of a presence of the mapping in the address translation table for the virtual address and the physical address;
intercepting (S506) an updating operation for the address translation table, the updating operation relating to creating a new mapping between a target virtual address of the virtual address space and a target physical address of the physical address space in the address translation table;
based on the metadata, determining (S508) whether at least one of the target virtual address and the target physical address is provided with the mapping in the address translation table; and
based on a determining result, deciding (S510) whether to perform the updating operation, wherein, if it is determined that each of the target virtual address and the target physical address is without the mapping in the address translation table, the deciding (S510) comprises deciding to perform the updating operation and updating the metadata, and, if it is determined that at least one of the target virtual address and the target physical address is provided with the mapping in the address translation table, the deciding (S510) comprises deciding to reject the updating operation.

8. The memory management method (500) of claim 7, further comprising providing a notification of the rejecting the updating operation.

9. The memory management method (500) of any one of claims 7 or 8, further comprising, before the determining (S508), checking whether the target virtual address and the target physical address are within predefined protected subspaces of the virtual address space and the physical address space, respectively, wherein the determining and deciding are performed when the target virtual address and the target physical address are within the predefined protected subspaces.

10. The memory management method (500) of any one of claims 7 to 9, wherein the generating (S504) comprises generating the metadata as a bitmap, the bitmap indicating the virtual address and the physical address provided with the mapping in the address translation table by using a first preset bit value.

11. The memory management method (500) of claim 10, further comprising indicating, in the bitmap, a virtual address of the virtual address space and a physical address of the physical address space that are without the mapping in the address translation table by using a second preset bit value, the second present bit value being different from the first preset bit value.

12. A computer program product comprising a computer-readable medium for storing a computer program, wherein the computer program, when executed by at least one processor, causes the at least one processor to perform the memory management method (500) of any one of claims 7 to 11.

## Patentansprüche

1. Speicherverwaltungseinrichtung (400), die umfasst:
mindestens eine Verarbeitungseinheit (402); und
eine Speichereinheit (404), die mit der mindestens einen Verarbeitungseinheit (402) gekoppelt ist und dazu konfiguriert ist, prozessorausführbare Anweisungen (406) zu speichern,
wobei die prozessorausführbaren Anweisungen (406), wenn sie von der mindestens einen Verarbeitungseinheit (402) ausgeführt werden, die mindestens eine Verarbeitungseinheit (402) veranlassen zum:
- Verfolgen einer virtuellen Adresse (108) eines virtuellen Adressraums und einer physischen Adresse (110) eines physischen Adressraums, die mit einer Zuordnung in einer Adressübersetzungstabelle (114) bereitgestellt sind;
- Erzeugen von Metadaten, die auf das Vorhandensein der Zuordnung in der Adressübersetzungstabelle (114) für die virtuelle Adresse (108) und die physische Adresse (110) hinweisen;
- Abfangen eines Aktualisierungsvorgangs (408) für die Adressübersetzungstabelle (114), wobei sich der Aktualisierungsvorgang (408) auf ein Erstellen einer neuen Zuordnung zwischen einer virtuellen Zieladresse (108) des virtuellen Adressraums und einer physischen Zieladresse (110) des physischen Adressraums in der Adressübersetzungstabelle (114) bezieht;
- basierend auf den Metadaten, Bestimmen, ob mindestens eine der virtuellen Zieladresse (108) und der physischen Zieladresse (110) mit der Zuordnung in der Adressübersetzungstabelle (114) bereitgestellt ist; und
- basierend auf einem Bestimmungsergebnis, Entscheiden (410), ob der Aktualisierungsvorgang durchgeführt werden soll, wobei die mindestens eine Verarbeitungseinheit dazu konfiguriert ist, als Reaktion auf das Bestimmen, dass die virtuelle Zieladresse (108) und die physische Zieladresse (110) jeweils ohne die Zuordnung in der Adressübersetzungstabelle (114) vorliegen, den Aktualisierungsvorgang durchzuführen und die Metadaten zu aktualisieren, und als Reaktion auf das Bestimmen, dass mindestens eine der virtuellen Zieladresse (108) und der physischen Zieladresse (110) mit der Zuordnung in der Adressübersetzungstabelle (114) bereitgestellt ist, den Aktualisierungsvorgang abzulehnen.

2. Speicherverwaltungseinrichtung (400) nach Anspruch 1, wobei die mindestens eine Verarbeitungseinheit (402) dazu konfiguriert ist, die Metadaten in einem vordefinierten Abschnitt der Speichereinheit (404) zu speichern.

3. Speicherverwaltungseinrichtung (400) nach Anspruch 1 oder 2, wobei die mindestens eine Verarbeitungseinheit (402) ferner dazu konfiguriert ist, eine Benachrichtigung über die Ablehnung des Aktualisierungsvorgangs (408) bereitzustellen.

4. Speicherverwaltungseinrichtung (400) nach einem der Ansprüche 1 bis 3, wobei die mindestens eine Verarbeitungseinheit (402) dazu konfiguriert ist, vor dem Bestimmen zu prüfen, ob die virtuelle Zieladresse (108) und die physische Zieladresse (110) innerhalb vordefinierter geschützter Unterräume des virtuellen Adressraums beziehungsweise des physischen Adressraums liegen, und mit dem Bestimmen und Entscheiden fortzufahren, wenn die virtuelle Zieladresse (108) und die physische Zieladresse (110) innerhalb der vordefinierten geschützten Unterräume liegen.

5. Speicherverwaltungseinrichtung (400) nach einem der Ansprüche 1 bis 4, wobei die mindestens eine Verarbeitungseinheit (402) dazu konfiguriert ist, die Metadaten als eine Bitmap zu erzeugen, wobei die Bitmap unter Verwendung eines ersten voreingestellten Bitwerts die virtuelle Adresse (108) und die physische Adresse (110) angibt, die mit der Zuordnung in der Adressübersetzungstabelle (114) bereitgestellt werden.

6. Speicherverwaltungseinrichtung (400) nach Anspruch 5, wobei die mindestens eine Verarbeitungseinheit (402) ferner dazu konfiguriert ist, in der Bitmap unter Verwendung eines zweiten voreingestellten Bitwerts eine virtuelle Adresse (108) des virtuellen Adressraums und eine physische Adresse (110) des physischen Adressraums anzugeben, die ohne die Zuordnung in der Adressübersetzungstabelle (114) vorliegen, wobei sich der zweite voreingestellte Bitwert von dem ersten voreingestellten Bitwert unterscheidet.

7. Speicherverwaltungsverfahren (500), das die folgenden Schritte umfasst:
Verfolgen (S502) einer virtuellen Adresse eines virtuellen Adressraums und einer physischen Adresse eines physischen Adressraums, die mit einer Zuordnung in einer Adressübersetzungstabelle bereitgestellt sind;
Erzeugen (S504) von Metadaten, die auf ein Vorhandensein der Zuordnung in der Adressübersetzungstabelle für die virtuelle Adresse und die physische Adresse hinweisen;
Abfangen (S506) eines Aktualisierungsvorgangs für die Adressübersetzungstabelle, wobei sich der Aktualisierungsvorgang auf das Erstellen einer neuen Zuordnung zwischen einer virtuellen Zieladresse des virtuellen Adressraums und einer physischen Zieladresse des physischen Adressraums in der Adressübersetzungstabelle bezieht;
basierend auf den Metadaten, Bestimmen (S508), ob mindestens eine der virtuellen Zieladresse und der physischen Zieladresse mit der Zuordnung in der Adressübersetzungstabelle bereitgestellt ist; und
basierend auf einem Bestimmungsergebnis, Entscheiden (S510), ob der Aktualisierungsvorgang durchgeführt werden soll, wobei, wenn bestimmt wird, dass die virtuelle Zieladresse und die physische Zieladresse jeweils ohne die Zuordnung in der Adressübersetzungstabelle vorliegen, das Entscheiden (S510) das Entscheiden zum Durchführen des Aktualisierungsvorgangs und zum Aktualisieren der Metadaten umfasst, und, wenn bestimmt wird, dass mindestens eine der virtuelle Zieladresse und der physischen Zieladresse mit der Zuordnung in der Adressübersetzungstabelle bereitgestellt ist, das Entscheiden (S510) das Entscheiden zum Ablehnen des Aktualisierungsvorgangs umfasst.

8. Speicherverwaltungsverfahren (500) nach Anspruch 7, das ferner das Bereitstellen einer Benachrichtigung über die Ablehnung des Aktualisierungsvorgangs umfasst.

9. Speicherverwaltungsverfahren (500) nach einem der Ansprüche 7 oder 8, das ferner vor dem Bestimmen (S508) das Überprüfen umfasst, ob sich die virtuelle Zieladresse und die physische Zieladresse jeweils innerhalb vordefinierter geschützter Unterräume des virtuellen Adressraums beziehungsweise des physischen Adressraums befinden, wobei das Bestimmen und Entscheiden durchgeführt werden, wenn sich die virtuelle Zieladresse und die physische Zieladresse innerhalb der vordefinierten geschützten Unterräume befinden.

10. Speicherverwaltungsverfahren (500) nach einem der Ansprüche 7 bis 9, wobei das Erzeugen (S504) das Erzeugen der Metadaten als eine Bitmap umfasst, wobei die Bitmap unter Verwendung eines ersten voreingestellten Bitwerts die virtuelle Adresse und die physische Adresse angibt, die mit der Zuordnung in der Adressübersetzungstabelle bereitgestellt werden.

11. Speicherverwaltungsverfahren (500) nach Anspruch 10, das ferner das Angeben einer virtuellen Adresse des virtuellen Adressraums und einer physischen Adresse des physischen Adressraums in der Bitmap unter Verwendung eines zweiten voreingestellten Bitwerts umfasst, die ohne die Zuordnung in der Adressübersetzungstabelle vorliegen, wobei sich der zweite voreingestellte Bitwert von dem ersten voreingestellten Bitwert unterscheidet.

12. Computerprogrammprodukt, das ein computerlesbares Medium zum Speichern eines Computerprogramms umfasst, wobei das Computerprogramm, wenn es von mindestens einem Prozessor ausgeführt wird, bewirkt, dass der mindestens eine Prozessor das Speicherverwaltungsverfahren (500) nach einem der Ansprüche 7 bis 11 durchführt.

## Revendications

1. Appareil de gestion de mémoire (400) comprenant :
au moins une unité de traitement (402) ; et
une unité de stockage (404) couplée à l'au moins une unité de traitement (402) et configurée pour stocker des instructions exécutables par processeur (406),
dans lequel les instructions exécutables par processeur (406), lorsqu'elles sont exécutées par l'au moins une unité de traitement (402), amènent l'au moins une unité de traitement (402) à :
- suivre une adresse virtuelle (108) d'un espace d'adressage virtuel et une adresse physique (110) d'un espace d'adressage physique qui sont dotées d'un mappage dans une table de traduction d'adresses (114) ;
- générer des métadonnées indiquant une présence du mappage dans la table de traduction d'adresses (114) pour l'adresse virtuelle (108) et l'adresse physique (110) ;
- intercepter une opération de mise à jour (408) pour la table de traduction d'adresses (114), l'opération de mise à jour (408) concernant la création d'un nouveau mappage entre une adresse virtuelle cible (108) de l'espace d'adressage virtuel et une adresse physique cible (110) de l'espace d'adressage physique dans la table de traduction d'adresses (114) ;
- sur la base des métadonnées, déterminer si au moins l'une de l'adresse virtuelle cible (108) et de l'adresse physique cible (110) est dotée du mappage dans la table de traduction d'adresses (114) ; et
- sur la base d'un résultat de détermination, décider (410) d'effectuer ou non l'opération de mise à jour, dans lequel l'au moins une unité de traitement est configurée, en réponse au fait de déterminer que chacune de l'adresse virtuelle cible (108) et de l'adresse physique cible (110) n'est pas dotée du mappage dans la table de traduction d'adresses (114), pour effectuer l'opération de mise à jour, et pour mettre à jour les métadonnées et, en réponse au fait de déterminer qu'au moins une de l'adresse virtuelle cible (108) et de l'adresse physique cible (110) est dotée du mappage dans la table de traduction d'adresses (114), pour rejeter l'opération de mise à jour.

2. Appareil de gestion de mémoire (400) selon la revendication 1, dans lequel l'au moins une unité de traitement (402) est configurée pour stocker les métadonnées dans une partie prédéfinie de l'unité de stockage (404).

3. Appareil de gestion de mémoire (400) selon la revendication 1 ou 2, dans lequel l'au moins une unité de traitement (402) est en outre configurée pour fournir une notification du rejet de l'opération de mise à jour (408).

4. Appareil de gestion de mémoire (400) selon l'une quelconque des revendications 1 à 3, dans lequel l'au moins une unité de traitement (402) est configurée, avant la détermination, pour vérifier si l'adresse virtuelle cible (108) et l'adresse physique cible (110) se trouvent dans des sous-espaces protégés prédéfinis de l'espace d'adressage virtuel et de l'espace d'adressage physique, respectivement, et pour procéder à la détermination et à la décision lorsque l'adresse virtuelle cible (108) et l'adresse physique cible (110) se trouvent dans les sous-espaces protégés prédéfinis.

5. Appareil de gestion de mémoire (400) selon l'une quelconque des revendications 1 à 4, dans lequel l'au moins une unité de traitement (402) est configurée pour générer les métadonnées sous forme de table de bits, la table de bits indiquant l'adresse virtuelle (108) et l'adresse physique (110) dotées du mappage dans la table de traduction d'adresses (114) en utilisant une première valeur de bit prédéfinie.

6. Appareil de gestion de mémoire (400) selon la revendication 5, dans lequel l'au moins une unité de traitement (402) est en outre configurée pour indiquer, dans la table de bits, une adresse virtuelle (108) de l'espace d'adressage virtuel et une adresse physique (110) de l'espace d'adressage physique qui ne sont pas dotées du mappage dans la table de traduction d'adresses (114) en utilisant une seconde valeur de bit prédéfinie, la seconde valeur de bit prédéfinie étant différente de la première valeur de bit prédéfinie.

7. Procédé de gestion de mémoire (500) comprenant les étapes suivantes :
le suivi (S502) d'une adresse virtuelle d'un espace d'adressage virtuel et d'une adresse physique d'un espace d'adressage physique qui sont dotées d'un mappage dans une table de traduction d'adresses ;
la génération (S504) de métadonnées indiquant une présence du mappage dans la table de traduction d'adresses pour l'adresse virtuelle et l'adresse physique ;
l'interception (S506) d'une opération de mise à jour de la table de traduction d'adresses, l'opération de mise à jour concernant la création d'un nouveau mappage entre une adresse virtuelle cible de l'espace d'adressage virtuel et une adresse physique cible de l'espace d'adressage physique dans la table de traduction d'adresses ;
sur la base des métadonnées, le fait déterminer (S508) si l'une au moins de l'adresse virtuelle cible et de l'adresse physique cible est dotée du mappage dans la table de traduction d'adresses ; et
sur la base d'un résultat de détermination, la décision (S510) d'effectuer ou non l'opération de mise à jour, dans lequel, s'il est déterminé que chacune de l'adresse virtuelle cible et de l'adresse physique cible n'est pas dotée du mappage dans la table de traduction d'adresses, la décision (S510) comprend la décision d'effectuer l'opération de mise à jour et de mettre à jour les métadonnées, et, s'il est déterminé qu'au moins une de l'adresse virtuelle cible et de l'adresse physique cible est dotée du mappage dans la table de traduction d'adresses, la décision (S510) comprend la décision de rejeter l'opération de mise à jour.

8. Procédé de gestion de mémoire (500) selon la revendication 7, comprenant en outre la fourniture d'une notification du rejet de l'opération de mise à jour.

9. Procédé de gestion de mémoire (500) selon l'une quelconque des revendications 7 ou 8, comprenant en outre, avant la détermination (S508), le fait de vérifier si l'adresse virtuelle cible et l'adresse physique cible se trouvent dans des sous-espaces protégés prédéfinis de l'espace d'adressage virtuel et de l'espace d'adressage physique, respectivement, dans lequel la détermination et la décision sont effectuées lorsque l'adresse virtuelle cible et l'adresse physique cible se trouvent dans les sous-espaces protégés prédéfinis.

10. Procédé de gestion de mémoire (500) selon l'une quelconque des revendications 7 à 9, dans lequel la génération (S504) comprend la génération des métadonnées sous forme de table de bits, la table de bits indiquant l'adresse virtuelle et l'adresse physique dotées du mappage dans la table de traduction d'adresses en utilisant une première valeur de bit prédéfinie.

11. Procédé de gestion de mémoire (500) selon la revendication 10, comprenant en outre l'indication, dans la table de bits, d'une adresse virtuelle de l'espace d'adressage virtuel et d'une adresse physique de l'espace d'adressage physique qui ne sont pas dotées du mappage dans la table de traduction d'adresses en utilisant une seconde valeur de bit prédéfinie, la seconde valeur de bit actuelle étant différente de la première valeur de bit prédéfinie.

12. Produit-programme informatique comprenant un support lisible par ordinateur permettant de stocker un programme informatique, dans lequel le programme informatique, lorsqu'il est exécuté par au moins un processeur, amène l'au moins un processeur à effectuer le procédé de gestion de mémoire (500) selon l'une quelconque des revendications 7 à 11.
